# EUROPEAN PATENT APPLICATION

(11) **EP 4 424 791 A1**
(43) Date of publication of application: **04.09.2024**
(21) Application number: 23869299.0
(22) Date of filing: 13.06.2023
(51) Int. Cl.: C09J 133/08, C09J 127/16, C08F 214/22, C08F 265/06, C08F 265/08, C08F 265/10, H01M 4/62, H01M 50/414, H01M 4/13

(54) **BINDER AND PREPARATION METHOD THEREFOR, SEPARATOR, ELECTRODE ASSEMBLY, BATTERY MONOMER, BATTERY, AND ELECTRIC DEVICE**

(30) Priority: 04.01.2023 CN 202310009894
(71) Applicant: Contemporary Amperex Technology Co., Limited, Ningde City, Fujian PRC 352100 (CN)
(72) Inventor: LI, Lei, Ningde, Fujian 352100 (CN); HONG, Haiyi, Ningde, Fujian 352100 (CN); CHENG, Xiaoan, Ningde, Fujian 352100 (CN); YANG, Jianrui, Ningde, Fujian 352100 (CN); KANG, Haiyang, Ningde, Fujian 352100 (CN); ZHENG, Yi, Ningde, Fujian 352100 (CN); SUN, Chengdong, Ningde, Fujian 352100 (CN)
(74) Representative: Kraus & Lederer PartGmbB
(86) International application number: PCT/CN2023/099962
(87) International publication number: WO 2024/146074

(57) **Abstract**

This application relates to the field of battery technologies, and in particular, to a binder and a preparation method thereof, and a separator, electrode assembly, battery cell, battery, and electric apparatus containing such binder. The binder includes a core layer structure and a shell layer structure provided on a surface of the core layer structure, where the core layer structure includes a polyacrylate polymer, and the shell layer structure includes a polyvinylidene fluoride polymer. Polyvinylidene fluoride is a homopolymer with a crystallinity of about 50%, resulting in insufficient adhesion force. Therefore, in this application, the polyvinylidene fluoride polymer is used to encapsulate the polyacrylate polymer to obtain the core-shell-structured binder, so that the crystallinity of the polyvinylidene fluoride polymer in the core-shell-structured binder is improved, and adhesion performance of the core-shell-structured binder is improved, thereby increasing adhesion force between a separator and an electrode plate by the binder.

## Description

### RELATED APPLICATIONS

This application claims priority to Chinese Patent Application No. 202310009894.X filed on January 04, 2023, which is incorporated herein by reference in its entirety.

### TECHNICAL FIELD

This application relates to the field of battery technologies, and in particular, to a binder and a preparation method thereof, and a separator, an electrode assembly, a battery cell, a battery, and an electric apparatus.

### BACKGROUND

With the rapid growth of portable electronic devices, electric vehicles, and the like, the demand for traction batteries is also increasing constantly. Electrochemical performance of batteries is also attracting more and more attention.

Currently, battery cells are having an opening issue. To be specific, gaps are easily formed between electrode plates and the separator, resulting in deteriorated cycling performance of batteries.

### SUMMARY

This application is mainly intended to provide a binder, so as to increase adhesion force between a separator and an electrode plate by the binder, thus improving cycling performance of batteries.

To achieve the above objectives, this application proposes a binder. The binder includes a core layer structure and a shell layer structure provided on a surface of the core layer structure, where the core layer structure includes a polyacrylate polymer, and the shell layer structure includes a polyvinylidene fluoride polymer.

The binder of this application includes the core layer structure and the shell layer structure provided on the surface of the core layer structure, where the core layer structure includes the polyacrylate polymer, and the shell layer structure includes the polyvinylidene fluoride polymer. Polyvinylidene fluoride is a homopolymer with a crystallinity of about 50%, resulting in insufficient adhesion force. Therefore, in this application, the polyvinylidene fluoride polymer is used to encapsulate the polyacrylate polymer to obtain the core-shell-structured binder, so that the crystallinity of the polyvinylidene fluoride polymer in the core-shell-structured binder is improved, and adhesion performance of the core-shell-structured binder is improved, thereby increasing adhesion force between a separator and an electrode plate by the binder.

Optionally, the shell layer structure includes a plurality of shells, where the plurality of shells are spaced apart on the surface of the core layer structure.

To further reduce the crystallinity of the polyvinylidene fluoride polymer in the shell layer structure, the crosslinking degree of the polyvinylidene fluoride polymer is reduced. To be specific, the shells formed by the polyvinylidene fluoride polymer do not continuously encapsulate the surface of the core layer structure, but are attached at intervals to the surface of the core layer structure, similar to a raspberry-shaped structure. It can be understood that the shell layer structure is formed by the plurality of shells; a gap may be present between adjacent two of the shells; and at the positions of the gaps, the surface of the core layer structure can be exposed. In this way, not only the crystallinity of the polyvinylidene fluoride polymer is reduced, but also the core layer structure is exposed. Since the core layer structure also has good adhesion, the core layer structure exposed between the shells can have improved adhesion performance. In addition, compared with a structure in which a core layer is entirely encapsulated by a shell layer, the raspberry-shaped core-shell structure has a larger specific surface area. Thus, a surface structure with an adhesion function can provide better adhesion.

Optionally, a mass ratio of the polyacrylate polymer to the polyvinylidene fluoride polymer is (2-100):1, optionally (10-90):1.

To obtain the above-mentioned shell layer structure with low crosslinking degree, the core layer structure has a larger mass than the shell layer structure so that the shell layer structure cannot entirely encapsulate the surface of the core layer structure, thus leaving part of the structure exposed on the surface of the core layer structure, thereby obtaining the above raspberry-shaped core-shell structure. The core layer structure having a larger mass than the shell layer structure may mean that the mass ratio of the polyacrylate polymer to the polyvinylidene fluoride polymer is (2-100): 1, where in (2-100): 1, the values include minimum and maximum values of the range and each value between such minimum and maximum values. Specific examples include but are not limited to point values in the embodiments and 2:1, 10:1, 20:1, 30:1, 40:1, 50:1, 60:1, 70:1, 80:1, 90:1, 100:1, and the like.

Optionally, the mass ratio of the polyacrylate polymer to the polyvinylidene fluoride polymer is (10-90):1.

In (10-90): 1, the values include minimum and maximum values of the range and each value between such minimum and maximum values. Specific examples include but are not limited to point values in the embodiments and 10:1, 20:1, 30:1, 40:1, 50:1, 60:1, 70:1, 80:1, 90:1, and the like.

Optionally, a median particle size by volume Dᵥ50 of the binder is 0.5 µm-50 µm, optionally 7 µm-8 µm.

Theoretically, the median particle size by volume Dᵥ50 of the binder in this application may be less than 0.5 µm or greater than 50 µm. However, considering that the binder in this application is used on a separator, the median particle size by volume Dᵥ50 of the binder can be neither excessively large nor excessively small. Excessively small binder is prone to block pores of a separator and reduce passage of lithium ions through the separator; and excessively large binder, when applied on a separator, may lead to formation of a thicker coating, affecting energy density of the subsequently prepared battery. Therefore, the median particle size by volume Dᵥ50 of the binder is 0.5 µm-50 µm, where in 0.5 µm-50 µm, the values include minimum and maximum values of the range and each value between such minimum and maximum values. Specific examples include but are not limited to point values in the embodiments and 0.5 µm, 1 µm, 5 µm, 10 µm, 15 µm, 20 µm, 25 µm, 30 µm, 35 µm, 40 µm, 45 µm, 50 µm, and the like.

Optionally, the median particle size by volume Dᵥ50 of the binder is 7 µm-8 µm.

When the median particle size by volume Dᵥ50 of the binder is 7 µm-8 µm, the obtained separator features good performance. In 7 µm-8 µm, the values include minimum and maximum values of the range and each value between such minimum and maximum values. Specific examples include but are not limited to point values in the embodiments and 7 µm, 7.5 µm, 8 µm, and the like.

Optionally, constituent monomers of the polyacrylate polymer include a first polymeric flexible monomer, a second polymeric polar monomer, and a third polymeric molecular weight regulating monomer.

In this application, the constituent monomers of the polyacrylate polymer include the first polymeric flexible monomer, the second polymeric polar monomer, and the third polymeric molecular weight regulating monomer, and the polymer is obtained through a crosslinking reaction of the three monomers. Molecular weight and glass transition temperature of the polymer can be controlled to improve the adhesion performance of the binder.

Optionally, a molar ratio of the first polymeric flexible monomer, the second polymeric polar monomer, and the third polymeric molecular weight regulating monomer is 1:(0.01-0.8):(0.01-0.15), optionally 1:(0.05-0.7):(0.05-0.12).

When the molar ratio of the first polymeric flexible monomer, the second polymeric polar monomer, and the third polymeric molecular weight regulating monomer is 1:(0.01-0.8):(0.01-0.15), the binder features good adhesion. In 1:(0.01-0.8):(0.01-0.15), the values include minimum and maximum values of the range and each value between such minimum and maximum values. Specific examples include but are not limited to point values in the embodiments and 1:0.01:0.01, 1:0.1:0.01, 1:0.4:0.01, 1:0.8:0.01, 1:0.01:0.05, 1:0.01:0.1, 1:0.01:0.15, 1:0.1:0.01, 1:0.1:0.05, 1:0.1:0.15, 1:0.4:0.01, 1:0.4:0.05, 1:0.4:0.15, 1:0.8:0.01, 1:0.8:0.05, 1:0.8:0.15, and the like.

Optionally, the molar ratio of the first polymeric flexible monomer, the second polymeric polar monomer, and the third polymeric molecular weight regulating monomer is 1:(0.05-0.7):(0.05-0.12).

When the molar ratio of the first polymeric flexible monomer, the second polymeric polar monomer, and the third polymeric molecular weight regulating monomer is 1:(0.05-0.7):(0.05-0.12), the binder features good adhesion. In 1:(0.05-0.7):(0.05-0.12), the values include minimum and maximum values of the range and each value between such minimum and maximum values. Specific examples include but are not limited to point values in the embodiments and 1:0.05:0.05, 1:0.1:0.05, 1:0.4:0.05, 1:0.7:0.05, 1:0.1:0.05, 1:0.1:0.1, 1:0.1:0.12, and the like.

Optionally, the first polymeric flexible monomer contains an ester bond in structure, the second polymeric polar monomer contains a cyano group in structure, and the third polymeric molecular weight regulating monomer contains an amide bond.

The ester bond can improve flexibility of a molecular chain, the cyano group can improve the polarity of the monomer, and the amide bond has polarity and can easily form a hydrogen bond, which can improve adhesion. The first polymeric flexible monomer contains the ester bond in structure, the second polymeric polar monomer contains the cyano group in structure, and the third polymeric molecular weight regulating monomer contains the amide bond, so that with the polymer obtained by polymerization of the above three monomers, the molecular weight and glass transition temperature of the polymer can be controlled to improve the adhesion performance of the binder.

Optionally, the first polymeric flexible monomer is an acrylate monomer, the second polymeric polar monomer is an acrylonitrile monomer, and the third polymeric molecular weight regulating monomer is an acrylamide monomer.

The acrylate monomer can improve swelling resistance of the polymer, and as a flexible monomer chain segment in a molecular chain segment, can regulate the glass transition temperature of the polymer and improve toughness of the binder when applied, thereby facilitating good adhesion.

The acrylonitrile monomer has a cyano group with strong polarity, conducive to improving ionic conductivity and improving adhesion.

The acrylamide monomer regulates the molecular weight and also features good adhesion.

With the polymer prepared using the above three types of monomers, the molecular weight and glass transition temperature of the polymer can be controlled to improve the adhesion performance of the binder.

Optionally, the acrylate monomer includes at least one of methyl acrylate, ethyl acrylate, n-butyl acrylate, isobutyl acrylate, sec-butyl acrylate, tert-butyl acrylate, n-propyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, and 2-hydroxypropyl methacrylate;
and/or the acrylonitrile monomer includes at least one of acrylonitrile and methacrylonitrile;
and/or the acrylamide monomer includes at least one of acrylamide, N-methylolacrylamide, and N-butoxymethylacrylamide.

Based on the fact that the acrylate monomer helps improve the adhesion of the binder, the acrylate monomer may include at least one of methyl acrylate, ethyl acrylate, n-butyl acrylate, isobutyl acrylate, sec-butyl acrylate, tert-butyl acrylate, n-propyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, and 2-hydroxypropyl methacrylate. To be specific, the constituent monomers of the polyacrylate polymer may include one of the above acrylate monomers, or may include more than one of the above acrylate monomers, which is not specifically limited.

Based on the fact that the acrylonitrile monomer helps improve the adhesion of the binder, the acrylonitrile monomer includes at least one of acrylonitrile and methacrylonitrile. To be specific, the constituent monomers of the polyacrylate polymer may include one of the above acrylonitrile monomers, or may include more than one of the above acrylonitrile monomers, which is not specifically limited.

Based on the fact that the acrylamide monomer helps improve the adhesion of the binder, the acrylamide monomer includes at least one of acrylamide, N-methylolacrylamide, and N-butoxymethylacrylamide. To be specific, the constituent monomers of the polyacrylate polymer may include one of the above acrylamide monomers, or may include more than one of the above acrylamide monomers, which is not specifically limited.

Optionally, the polyvinylidene fluoride polymer includes at least one of vinylidene fluoride polymer, vinylidene fluoride-hexafluoropropylene copolymer, vinylidene fluoride-pentafluoropropylene copolymer, vinylidene fluoride-tetrafluoropropylene copolymer, vinylidene fluoride-trifluoropropylene copolymer, vinylidene fluoride-perfluorobutene copolymer, vinylidene fluoride-tetrafluoroethylene copolymer, vinylidene fluoride-trifluoroethylene copolymer, vinylidene fluoride-trifluorochloroethylene copolymer, or vinylidene fluoride-fluoroethylene copolymer.

In addition to good chemical resistance and corrosion resistance, the polyvinylidene fluoride polymer also has special properties such as high temperature resistance, oxidization resistance, weather resistance, and radiation resistance, features piezoelectricity, dielectricity, and thermoelectric property, and is commonly used in lithium-ion battery separators.

The polyvinylidene fluoride polymer used in this application includes at least one of vinylidene fluoride polymer, vinylidene fluoride-hexafluoropropylene copolymer, vinylidene fluoride-pentafluoropropylene copolymer, vinylidene fluoride-tetrafluoropropylene copolymer, vinylidene fluoride-trifluoropropylene copolymer, vinylidene fluoride-perfluorobutene copolymer, vinylidene fluoride-tetrafluoroethylene copolymer, vinylidene fluoride-trifluoroethylene copolymer, vinylidene fluoride-trifluorochloroethylene copolymer, or vinylidene fluoride-fluoroethylene copolymer. To be specific, the polyvinylidene fluoride polymer may include one of the above polyvinylidene fluoride polymers, or may include more than one of the above polyvinylidene fluoride polymers, which is not specifically limited.

This application provides a preparation method of binder characterized by including the following steps:
mixing and stirring water, an emulsifier, an initiator, and constituent monomers of a polyacrylate polymer and heating for reaction to obtain a core-layer seed emulsion; and
putting water, an emulsifier, an initiator, and constituent monomers of a polyvinylidene fluoride polymer into the core-layer seed emulsion, stirring, and heating under a reaction pressure for polymerization reaction, to obtain a core-shell-structured binder.

In this application, the polyacrylate polymer of the core layer is obtained through emulsion polymerization, and then the polyvinylidene fluoride polymer of the shell layer is prepared on the surface of the core layer structure through emulsion polymerization to ultimately form the core-shell-structured binder.

Optionally, a mass ratio of the constituent monomers of the polyacrylate polymer to the constituent monomers of the polyvinylidene fluoride polymer is (2-100):1, optionally (10-90):1.

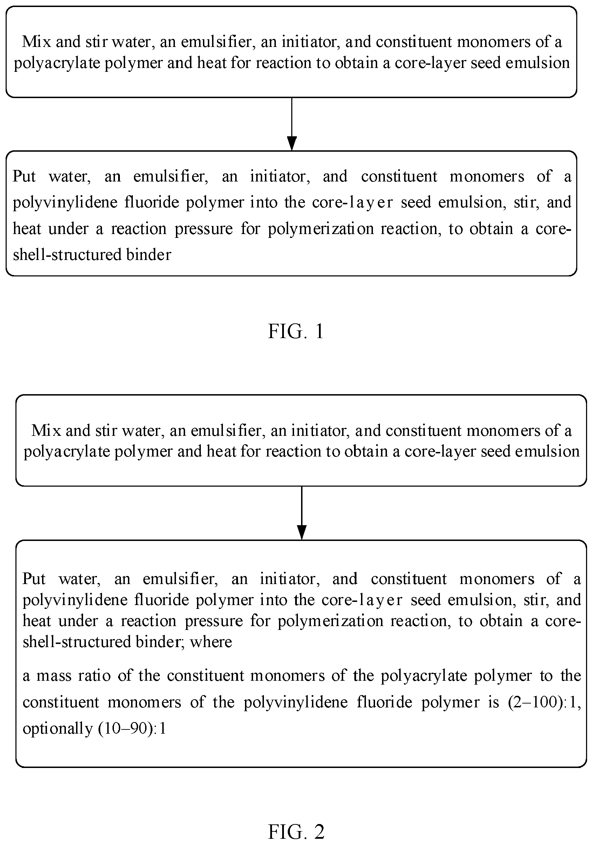

To obtain the raspberry-shaped core-shell structure, the constituent monomers of the polyacrylate polymer should have a larger mass than the constituent monomers of the polyvinylidene fluoride polymer so that a structural surface area of the formed core layer is large enough. To be specific, the core layer has a larger mass with larger structure, and the shell layer has smaller mass, ensuring that the shell layer structure cannot entirely encapsulate the surface of the core layer, that is, the polyvinylidene fluoride polymer is not continuously attached to the surface of the core layer, leading to low crosslinking degree and crystallinity of the polyvinylidene fluoride polymer, thereby reducing the crystallinity of the polyvinylidene fluoride polymer through this core-shell structure, and improving the adhesion performance of the binder prepared. Therefore, as shown in FIG. 2, the mass ratio of the constituent monomers of the polyacrylate polymer to the constituent monomers of the polyvinylidene fluoride polymer is (2-100):1, where in (2-100):1, the values include minimum and maximum values of the range and each value between such minimum and maximum values. Specific examples include but are not limited to point values in the embodiments and 2:1, 10:1, 20:1, 30:1, 40:1, 50:1, 60:1, 70:1, 80:1, 90:1, 100:1, and the like.

Optionally, the mass ratio of the constituent monomers of the polyacrylate polymer to the constituent monomers of the polyvinylidene fluoride polymer is (10-90):1.

In (10-90):1, the values include minimum and maximum values of the range and each value between such minimum and maximum values. Specific examples include but are not limited to point values in the embodiments and 10:1, 20:1, 30:1, 40:1, 50:1, 60:1, 70:1, 80:1, 90:1, and the like.

Optionally, the step of mixing and stirring water, an emulsifier, an initiator, and constituent monomers of a polyacrylate polymer and heating for reaction to obtain a core-layer seed emulsion includes the following steps:
mixing and stirring water, the emulsifier, and the constituent monomers of the polyacrylate polymer to obtain a core-layer monomer pre-emulsion; and
after temperature rise, adding in batches the initiator and stirring for reaction to obtain the core-layer seed emulsion after the reaction.

To avoid explosive polymerization under a heating condition caused by excessive initiator added in one time before heating, in this application, water, the emulsifier, and the constituent monomers of the polyacrylate polymer are mixed and stirred to obtain the core-layer monomer pre-emulsion; and to avoid explosive polymerization caused by excessive initiator added dropwise in one batch, after temperature rise, the initiator is added in batches and stirred for reaction to obtain the core-layer seed emulsion after the reaction.

Optionally, the constituent monomers of the polyvinylidene fluoride polymer include vinylidene fluoride;
or the constituent monomers of the polyvinylidene fluoride polymer include vinylidene fluoride and at least one of hexafluoropropylene, pentafluoropropylene, tetrafluoropropylene, trifluoropropylene, perfluorobutene, tetrafluoroethylene, trifluoroethylene, trifluorochloroethylene, and fluoroethylene.

The polyvinylidene fluoride polymer refers to a polymer using vinylidene fluoride as monomers. In addition to vinylidene fluoride, the monomers of the polyvinylidene fluoride polymer further include at least one of hexafluoropropylene, pentafluoropropylene, tetrafluoropropylene, trifluoropropylene, perfluorobutene, tetrafluoroethylene, trifluoroethylene, trifluorochloroethylene, and fluoroethylene. To be specific, the polyvinylidene fluoride polymer may be a homopolymer of vinylidene fluoride or a copolymer of vinylidene fluoride and other fluorine-containing ethylene, which is not specifically limited.

This application provides a separator, where the separator includes the foregoing binder or a binder prepared using the foregoing preparation method of binder.

The separator being coated with the foregoing binder can improve adhesion performance between an electrode plate and the binder, and alleviate the problem of openings in an existing pre-cold pressing process for battery cells.

An embodiment of this application provides an electrode assembly, where the electrode assembly includes the foregoing separator.

The electrode assembly includes a positive electrode plate, a negative electrode plate, and a separator. The binder is applied on the separator to adhere the electrode plates and the separator together, so as to alleviate the problem of openings for electrode plates and separators.

An embodiment of this application provides a battery cell, where the battery cell includes the foregoing electrode assembly.

The foregoing electrode assembly being applied to the battery cell can improve large-clamp cycling performance of the battery cell.

An embodiment of this application provides a battery, where the battery includes the foregoing battery cell.

An embodiment of this application provides an electric apparatus, where the electric apparatus includes the foregoing battery cell or battery.

### BRIEF DESCRIPTION OF DRAWINGS

To describe the technical solutions of the embodiments of this application more clearly, the following briefly describes the accompanying drawings required for describing the embodiments or the prior art. Apparently, the accompanying drawings in the following descriptions show merely some embodiments of this application, and persons of ordinary skill in the art may still derive other drawings from the accompanying drawings without creative efforts.
FIG. 1 is a schematic flowchart of a preparation method of binder according to an embodiment of this application;
FIG. 2 is a schematic flowchart of a preparation method of binder according to an embodiment of this application;
FIG. 3 is a scanning electron microscope image of a binder according to an embodiment of this application;
FIG. 4 is an enlarged scanning electron microscope image of the binder in FIG. 3;
FIG. 5 is a schematic diagram of an electrode assembly according to an embodiment of this application;
FIG. 6 is an exploded view of the electrode assembly according to the embodiment of this application in FIG. 5;
FIG. 7 is a schematic diagram of a battery module according to an embodiment of this application;
FIG. 8 is a schematic diagram of a battery pack according to an embodiment of this application;
FIG. 9 is an exploded view of the battery pack according to the embodiment of this application in FIG. 8; and
FIG. 10 is a schematic diagram of an electric apparatus using an electrode assembly as a power source according to an embodiment of this application.

Description of reference signs:

| Reference sign | Name | Reference sign | Name |
|---|---|---|---|
| 1 | Battery pack | 5 | Electrode assembly |
| 2 | Upper box body | 51 | Housing |
| 3 | Lower box body | 52 | Electrode assembly |
| 4 | Battery module | 53 | Top cover assembly |

The achievement of the objectives, functional features, and advantages of this application are further described in connection with the embodiments and with reference to the accompanying drawings.

### DESCRIPTION OF EMBODIMENTS

The following clearly and completely describes the technical solutions in the embodiments of this application with reference to the accompanying drawings in the embodiments of this application. Apparently, the described embodiments are some but not all embodiments of this application. All other embodiments obtained by persons of ordinary skill in the art based on the embodiments of this application without creative efforts shall fall within the protection scope of this application.

The following specifically discloses in detail embodiments of the binder and preparation method thereof, and the separator, electrode assembly, battery cell, battery, and electric apparatus containing such binder of this application, with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it should be understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers from "0-5" are listed herein, and "0-5" is just an abbreviated representation of a combination of these values. In addition, when a parameter is expressed as an integer greater than or equal to 2, this is equivalent to disclosure that the parameter is, for example, an integer: 2, 3, 4, 5, 6, 7, 8, 9, 10, 11, or 12.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Battery cells have the problem of openings. To be specific, gaps are easily formed between electrode plates and separators, resulting in deteriorated cycling performance of batteries.

For example, polyvinylidene fluoride, as the most commonly used binder, has been widely used in separators. However, at present, the price of polyvinylidene fluoride has risen sharply, resulting in a tight supply in the market. Applying a polyvinylidene fluoride polymer onto a surface of a lithium battery separator can partially solve the problem of high-temperature shrinkage of the separator. After wound, battery cells undergo cold pressing. However, conventional polyvinylidene fluoride is a homopolymer with a crystallinity of about 50%, leading to insufficient adhesion force between the separator and positive and negative electrode plates, which often results in the problem of openings for battery cells, such that requirements for coated separator performance of traction lithium-ion batteries cannot be satisfied.

To be specific, applying a polyvinylidene fluoride polymer onto a surface of a lithium battery separator can partially solve the problem of high-temperature shrinkage of the separator. After wound, battery cells undergo cold pressing. However, conventional polyvinylidene fluoride is a homopolymer with a crystallinity of about 50%, leading to insufficient adhesion force between the separator and positive and negative electrode plates, which often results in the problem of openings for battery cells. Presence of openings for the battery cells leads to gaps formed between the electrode plates and the separator, which results in overall loose structure of the battery cells and reduced hardness of the battery cell, thereby resulting in deteriorated cycling performance of the battery cells.

A battery cell is formed by adhering positive and negative electrode plates and a separator, and the battery cell has certain hardness. To be specific, the adhered positive and negative electrode plates and the separator are attached to and support each other to form a structure with a certain thickness, and this structure with a certain thickness has certain hardness. The negative electrode swells during charging and discharging, and if adhesion force is poor, a gap will be formed between the positive and negative electrode plates and the separator, such that the positive and negative electrode plates and the separator cannot be attached to and support each other, leading to a loose battery cell with decreased hardness. In this case, kinetic performance of the battery cell is deteriorated, for example, rate performance is deteriorated; and cycling performance is also deteriorated. For example, in an electric vehicle, a loose battery cell in a battery leads to slower charging speed and deteriorated cycling performance of the battery, directly resulting in shorter service life of the battery, frequent battery replacement for the electric vehicle, and increased costs for a consumer on the electric vehicle.

In view of this, this application proposes a binder, where the binder includes a core layer structure and a shell layer structure provided on a surface of the core layer structure, the core layer structure including a polyacrylate polymer, and the shell layer structure including a polyvinylidene fluoride polymer.

The binder refers to a material with adhesion performance for adhering different substances together.

A core-shell structure is formed by a core at the center and a shell for encapsulation on an outer layer.

The core layer structure refers to a structure located inside the core-shell structure and encapsulated by the shell on the outer layer.

The shell layer structure refers to a structure located at an outer part of the core-shell structure and encapsulating the surface of the core layer structure.

Polyacrylate polymer is a polymer with acrylates as monomers.

Polyvinylidene fluoride polymer is a polymer with vinylidene fluoride as monomers.

In this application, the polyvinylidene fluoride polymer is used to encapsulate the polyacrylate polymer to obtain the core-shell-structured binder, so that the crystallinity of the polyvinylidene fluoride polymer in the core-shell-structured binder is improved, and adhesion performance of the core-shell-structured binder is improved, thereby increasing adhesion force between a separator and an electrode plate by the binder. The binder of this application provides good adhesion performance, such that swelling of an electrode plate does not lead to separation of the electrode plate from a separator, allowing good hardness maintained for a battery cell, and thus improving kinetic performance and cycling performance of the battery cell.

Theoretically, as the crystallinity increases, molecular chains are arranged closely in order, porosity is low, intermolecular interaction forces increase, chain segment movement becomes difficult, and yield stress, strength, modulus, hardness, and the like of the polymer are all improved, while elongation at break and impact toughness are reduced. Apparently, crystallization makes the polymer become hard and have deteriorated adhesion performance.

In this application, the polyvinylidene fluoride polymer is used to fully encapsulate the polyacrylate polymer. Compared with pure polyvinylidene fluoride, the core-shell-structured binder of this application has reduced overall crystallinity and improved adhesion performance. Therefore, the use of such core-shell-structured binder can increase adhesion force between a separator and an electrode plate, avoiding the problem of openings for battery cells. In addition, the reduced crystallinity makes a molecular structure in the binder be highly disordered and have high porosity, and further improves liquid infiltration of the binder. Applying the binder to a separator helps improve electrolyte infiltration of the separator and improve cycling performance of a battery.

In some embodiments, the shell layer structure includes a plurality of shells, where the plurality of shells are spaced apart on the surface of the core layer structure.

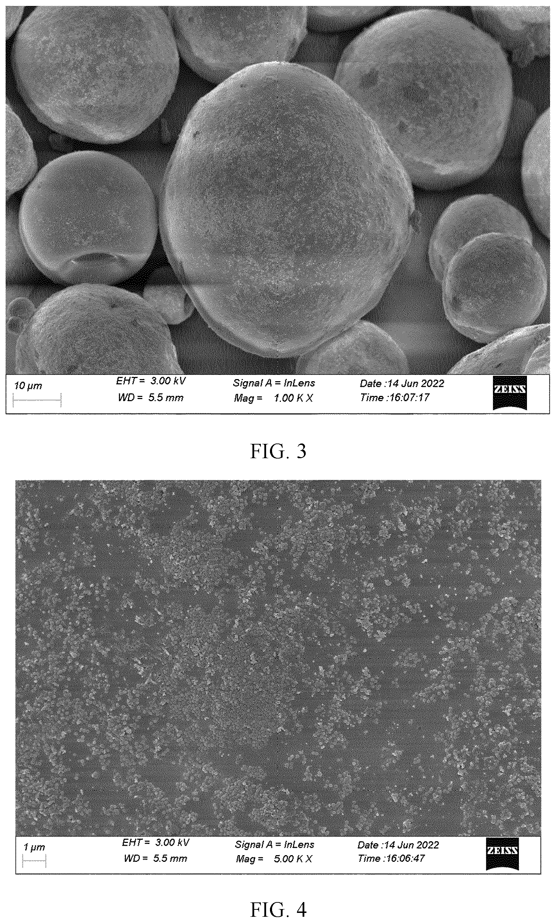

As shown in FIG. 3 and FIG. 4, to further reduce the crystallinity of the polyvinylidene fluoride polymer in the shell layer structure, the crosslinking degree of the polyvinylidene fluoride polymer is reduced. To be specific, the shells formed by the polyvinylidene fluoride polymer do not continuously encapsulate the surface of the core layer structure, but are attached at intervals to the surface of the core layer structure, similar to a raspberry-shaped structure. It can be understood that the shell layer structure is formed by the plurality of shells; a gap may be present between adjacent two of the shells; and at the positions of the gaps, the surface of the core layer structure can be exposed. In this way, not only the crystallinity of the polyvinylidene fluoride polymer is reduced, but also the core layer structure is exposed. Since the core layer structure also has good adhesion, the core layer structure exposed between the shells can have improved adhesion performance. In addition, compared with a structure in which a core layer is entirely encapsulated by a shell layer, the raspberry-shaped core-shell structure has a larger specific surface area. Thus, a surface structure with an adhesion function can provide better adhesion.

It can be understood that functional groups on the surface of the shell layer of the polyvinylidene fluoride polymer and the core layer of the polyacrylate polymer do not undergo crosslinking reactions, and an ionic bonding mechanism between the core layer and the shell layer is mainly used to adsorb constituent monomers of the polyvinylidene fluoride polymer onto constituent monomers of the polyacrylate polymer under the actions of ionic bonds, the van der Waals force, and the like.

In some embodiments, a mass ratio of the polyacrylate polymer to the polyvinylidene fluoride polymer is (2-100): 1, optionally (10-90): 1.

For a mass ratio test method, during preparation of the binder, mass of monomers put during reaction for preparation of a core layer structure is recorded as m, mass of monomers used for preparation of a shell layer structure is recorded as n, and then the mass ratio of the polyacrylate polymer to the polyvinylidene fluoride polymer is m:n.

To obtain the above-mentioned shell layer structure with low crosslinking degree, the core layer structure has a larger mass than the shell layer structure so that the shell layer structure cannot entirely encapsulate the surface of the core layer structure, thus leaving part of the structure exposed on the surface of the core layer structure, thereby obtaining the above raspberry-shaped core-shell structure. The core layer structure having a larger mass than the shell layer structure may mean that the mass ratio of the polyacrylate polymer to the polyvinylidene fluoride polymer is (2-100):1, where in (2-100):1, the values include minimum and maximum values of the range and each value between such minimum and maximum values. Specific examples include but are not limited to point values in the embodiments and 2:1, 10:1, 20:1, 30:1, 40:1, 50:1, 60:1, 70:1, 80:1, 90:1, 100:1, and the like.

In some embodiments, the mass ratio of the polyacrylate polymer to the polyvinylidene fluoride polymer is (10-90):1.

In (10-90):1, the values include minimum and maximum values of the range and each value between such minimum and maximum values. Specific examples include but are not limited to point values in the embodiments and 10:1, 20:1, 30:1, 40:1, 50:1, 60:1, 70:1, 80:1, 90:1, and the like.

In some embodiments, a median particle size by volume Dᵥ50 of the binder is 0.5 µm-50 µm, optionally 7 µm-8 µm.

The median particle size by volume Dᵥ50 of the binder may be measured using a common method in the art. For example, it may be measured in accordance with GBAT 19077-2016 using a Malvern laser particle size analyzer, for example, using an instrument such as Mastersizer-3000 from Malvern.

Theoretically, the median particle size by volume Dᵥ50 of the binder in this application may be less than 0.5 µm or greater than 50 µm. However, considering that the binder in this application is used on a separator, the median particle size by volume Dᵥ50 of the binder can be neither excessively large nor excessively small. Excessively small binder is prone to block pores of a separator and reduce passage of lithium ions through the separator; and excessively large binder, when applied on a separator, may lead to formation of a thicker coating, affecting energy density of the subsequently prepared battery. Therefore, the median particle size by volume Dᵥ50 of the binder is 0.5 µm-50 µm, where in 0.5 µm-50 µm, the values include minimum and maximum values of the range and each value between such minimum and maximum values. Specific examples include but are not limited to point values in the embodiments and 0.5 µm, 1 µm, 5 µm, 10 µm, 15 µm, 20 µm, 25 µm, 30 µm, 35 µm, 40 µm, 45 µm, 50 µm, and the like.

In some embodiments, the median particle size by volume Dᵥ50 of the binder is 7 µm-8 µm.

When the median particle size by volume Dᵥ50 of the binder is 7 µm-8 µm, the obtained separator features good performance. In 7 µm-8 µm, the values include minimum and maximum values of the range and each value between such minimum and maximum values. Specific examples include but are not limited to point values in the embodiments and 7 µm, 7.5 µm, 8 µm, and the like.

In some embodiments, constituent monomers of the polyacrylate polymer include a first polymeric flexible monomer, a second polymeric polar monomer, and a third polymeric molecular weight regulating monomer.

The flexible monomer has a homopolymer glass transition temperature lower than that of a rigid monomer. Compared with a rigid group, the flexible monomer has certain flexibility, with a chain segment able to move, and the flexible monomer chain segment can regulate glass transition temperature of the polymer and improve toughness of the binder when applied, thereby facilitating good adhesion.

The polar monomer is a monomer that contains a polar group. The polar monomer helps improve adhesion of the polymer.

The molecular weight regulating monomer is a monomer involved in a crosslinking reaction and used for regulating a molecular weight of the polymer. A molecular weight of the binder falling within a specified range helps improve the adhesion.

In this application, the constituent monomers of the polyacrylate polymer include the first polymeric flexible monomer, the second polymeric polar monomer, and the third polymeric molecular weight regulating monomer, and the polymer is obtained through a crosslinking reaction of the three monomers. Molecular weight and glass transition temperature of the polymer can be controlled to improve the adhesion performance of the binder.

The modified polymer has a lower softening point than the pure polyvinylidene fluoride polymer, so that during pre-cold pressing of a battery cell, the binder can fully penetrate into gaps between positive and negative electrode plates and the separator. To be specific, gaps are present between the electrode plates and the separator, and the binder penetrates into the gaps so that the electrode plates and the separator are effectively connected, and it is difficult for the binder to come out of the gaps. During swelling of the electrode plates, the binder has toughness, and therefore the binder can still effectively connect the two during swelling. This can make full use of the adhesion performance of the binder, and in turn helps improve kinetic performance and large-clamp cycling performance of a battery.

The softening point refers to a temperature at which a substance softens. The softening point is related to both the structure and molecular weight of the polymer. In this application, the molecular weight of the polymer is regulated by the third polymeric molecular weight regulating monomer so as to improve the softening point of the polymer.

The large-clamp cycling performance is a cycling functional testing performance for battery cells. During the testing process, a battery cell is placed in a clamp, and a certain force is applied to the clamp to compress the battery cell. The battery cell swells after fully charged, and under the compression of both the clamping force and the force from swelling, the battery cell deforms. This test is conducted to evaluate shape retention performance and compression resistance of the battery cell. With the binder in this solution, the good adhesion performance alleviates the swelling of the battery cell, resulting in better shape retention of the battery cell. The battery cell using the binder in this application exhibits good performance retention under the large-clamp testing conditions, indicating that the battery cell obtained using the binder in this solution features good shape retention. After the battery cell is assembled into a battery, space for mounting the battery cell in the battery can be reduced since the battery cell is less prone to deformation, allowing the battery to be made smaller. This is because if the battery cell is prone to deformation, such deformation compresses a structure near the battery cell. To avoid such phenomenon, more space is required for accommodating the deformed battery cell, to be specific, space needs to be reserved in the battery for accommodating the deformed part of the battery cell, thus taking up more space inside the battery.

In addition, good large-clamp cycling performance of the battery cell also indicates good cycling performance of the battery cell. For example, when the battery cell swells, the gap between the electrode plates and the separator becomes larger, and the path of lithium ions passing through the positive and negative electrodes becomes longer, resulting in deteriorated cycling.

In some embodiments, a molar ratio of the first polymeric flexible monomer, the second polymeric polar monomer, and the third polymeric molecular weight regulating monomer is 1:(0.01-0.8):(0.01-0.15), optionally 1:(0.05-0.7):(0.05-0.12).

For a molar ratio test method, during preparation of the binder, mole numbers of the monomers put during reaction for preparation of a shell layer structure are recorded, where the mole number of the monomer is equal to mass of the monomer divided by a molecular weight of the monomer, the mole number of the first polymeric flexible monomer is defined as a, the mole number of the second polymeric polar monomer is defined as b, the mole number of the third polymeric molecular weight regulating monomer is defined as c, and then the molar ratio of the first polymeric flexible monomer, the second polymeric polar monomer, and the third polymeric molecular weight regulating monomer is a:b:c.

When the molar ratio of the first polymeric flexible monomer, the second polymeric polar monomer, and the third polymeric molecular weight regulating monomer is 1:(0.01-0.8):(0.01-0.15), the binder features good adhesion. In 1:(0.01-0.8):(0.01-0.15), the values include minimum and maximum values of the range and each value between such minimum and maximum values. Specific examples include but are not limited to point values in the embodiments and 1:0.01:0.01, 1:0.1:0.01, 1:0.4:0.01, 1:0.8:0.01, 1:0.01:0.05, 1:0.01:0.1, 1:0.01:0.15, 1:0.1:0.01, 1:0.1:0.05, 1:0.1:0.15, 1:0.4:0.01, 1:0.4:0.05, 1:0.4:0.15, 1:0.8:0.01, 1:0.8:0.05, 1:0.8:0.15, and the like.

In some embodiments, the molar ratio of the first polymeric flexible monomer, the second polymeric polar monomer, and the third polymeric molecular weight regulating monomer is 1:(0.05-0.7):(0.05-0.12).

When the molar ratio of the first polymeric flexible monomer, the second polymeric polar monomer, and the third polymeric molecular weight regulating monomer is 1:(0.05-0.7):(0.05-0.12), the binder features good adhesion. In 1:(0.05-0.7):(0.05-0.12), the values include minimum and maximum values of the range and each value between such minimum and maximum values. Specific examples include but are not limited to point values in the embodiments and 1:0.05:0.05, 1:0.1:0.05, 1:0.4:0.05, 1:0.7:0.05, 1:0.1:0.05, 1:0.1:0.1, 1:0.1:0.12, and the like.

In some embodiments, the first polymeric flexible monomer contains an ester bond (-COOR (R is generally another non-H group such as an alkyl group)) in structure, the second polymeric polar monomer contains a cyano group (-C=N) in structure, and the third polymeric molecular weight regulating monomer contains an amide bond (-CO-NH-).

The ester bond can improve flexibility of a molecular chain, the cyano group can improve the polarity of the monomer, and the amide bond has polarity and can easily form a hydrogen bond, which can improve adhesion. The first polymeric flexible monomer contains the ester bond in structure, the second polymeric polar monomer contains the cyano group in structure, and the third polymeric molecular weight regulating monomer contains the amide bond, so that with the polymer obtained by polymerization of the above three monomers, the molecular weight and glass transition temperature of the polymer can be controlled to improve the adhesion performance of the binder.

In some embodiments, the first polymeric flexible monomer is an acrylate monomer, the second polymeric polar monomer is an acrylonitrile monomer, and the third polymeric molecular weight regulating monomer is an acrylamide monomer.

The acrylate monomer can improve swelling resistance of the polymer, and as a flexible monomer chain segment in a molecular chain segment, can regulate the glass transition temperature of the polymer and improve toughness of the binder when applied, thereby facilitating good adhesion.

The acrylonitrile monomer has a cyano group with strong polarity, conducive to improving ionic conductivity and improving adhesion.

The acrylamide monomer regulates the molecular weight and also features good adhesion.

With the polymer prepared using the above three types of monomers, the molecular weight and glass transition temperature of the polymer can be controlled to improve the adhesion performance of the binder.

In some embodiments, the acrylate monomer includes at least one of methyl acrylate, ethyl acrylate, n-butyl acrylate, isobutyl acrylate, sec-butyl acrylate, tert-butyl acrylate, n-propyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, and 2-hydroxypropyl methacrylate; and/or the acrylonitrile monomer includes at least one of acrylonitrile and methacrylonitrile; and/or the acrylamide monomer includes at least one of acrylamide, N-methylolacrylamide, and N-butoxymethylacrylamide.

Based on the fact that the acrylate monomer helps improve the adhesion of the binder, the acrylate monomer may include at least one of methyl acrylate, ethyl acrylate, n-butyl acrylate, isobutyl acrylate, sec-butyl acrylate, tert-butyl acrylate, n-propyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, and 2-hydroxypropyl methacrylate. To be specific, the constituent monomers of the polyacrylate polymer may include one of the above acrylate monomers, or may include more than one of the above acrylate monomers, which is not specifically limited.

Based on the fact that the acrylonitrile monomer helps improve the adhesion of the binder, the acrylonitrile monomer includes at least one of acrylonitrile and methacrylonitrile. To be specific, the constituent monomers of the polyacrylate polymer may include one of the above acrylonitrile monomers, or may include more than one of the above acrylonitrile monomers, which is not specifically limited.

Based on the fact that the acrylamide monomer helps improve the adhesion of the binder, the acrylamide monomer includes at least one of acrylamide, N-methylolacrylamide, and N-butoxymethylacrylamide. To be specific, the constituent monomers of the polyacrylate polymer may include one of the above acrylamide monomers, or may include more than one of the above acrylamide monomers, which is not specifically limited.

In some embodiments, the polyvinylidene fluoride polymer includes at least one of vinylidene fluoride polymer, vinylidene fluoride-hexafluoropropylene copolymer, vinylidene fluoride-pentafluoropropylene copolymer, vinylidene fluoride-tetrafluoropropylene copolymer, vinylidene fluoride-trifluoropropylene copolymer, vinylidene fluoride-perfluorobutene copolymer, vinylidene fluoride-tetrafluoroethylene copolymer, vinylidene fluoride-trifluoroethylene copolymer, vinylidene fluoride-trifluorochloroethylene copolymer, or vinylidene fluoride-fluoroethylene copolymer.

In addition to good chemical resistance and corrosion resistance, the polyvinylidene fluoride polymer also has special properties such as high temperature resistance, oxidization resistance, weather resistance, and radiation resistance, features piezoelectricity, dielectricity, and thermoelectric property, and is commonly used in lithium-ion battery separators.

The polyvinylidene fluoride polymer used in this application includes at least one of vinylidene fluoride polymer, vinylidene fluoride-hexafluoropropylene copolymer, vinylidene fluoride-pentafluoropropylene copolymer, vinylidene fluoride-tetrafluoropropylene copolymer, vinylidene fluoride-trifluoropropylene copolymer, vinylidene fluoride-perfluorobutene copolymer, vinylidene fluoride-tetrafluoroethylene copolymer, vinylidene fluoride-trifluoroethylene copolymer, vinylidene fluoride-trifluorochloroethylene copolymer, or vinylidene fluoride-fluoroethylene copolymer. To be specific, the polyvinylidene fluoride polymer may include one of the above polyvinylidene fluoride polymers, or may include more than one of the above polyvinylidene fluoride polymers, which is not specifically limited.

As shown in FIG. 1, this application further provides a preparation method of binder including the following steps:
mixing and stirring water, an emulsifier, an initiator, and constituent monomers of a polyacrylate polymer and heating for reaction to obtain a core-layer seed emulsion; and
putting water, an emulsifier, an initiator, and constituent monomers of a polyvinylidene fluoride polymer into the core-layer seed emulsion, stirring, and heating under a reaction pressure for polymerization reaction, to obtain a binder.

In this application, the polyacrylate polymer of the core layer is obtained through emulsion polymerization, and then the polyvinylidene fluoride polymer of the shell layer is prepared on the surface of the core layer structure through emulsion polymerization to ultimately form the core-shell-structured binder.

Emulsion polymerization: emulsion polymerization is that monomers are dispersed in water through emulsifier and mechanical stirring to form an emulsion, and then an initiator is added to initiate monomer polymerization.

A core-shell structure is formed by a core at the center and a shell for encapsulation on an outer layer.

Seed emulsion: a small quantity of monomers are prepared first into seed latex using a common emulsion polymerization method, then a small amount of the seed latex is added into formal emulsion polymerization compositions, and polymerization reaction is performed using latex particles of the seed emulsion as cores to make the latex particles grow continuously.

Pre-emulsion is a solution obtained through pre-emulsification of monomers. Emulsification is an effect of dispersing one liquid to uniformity in another liquid in the form of tiny droplets, where the two liquids are immiscible with each other, and water, an emulsifier, and constituent monomers of a polyacrylate polymer are mixed and stirred such that the constituent monomers of the polyacrylate polymer are dispersed in water under the action of the emulsifier.

Emulsifier: emulsifier is a type of substance that can convert mutually immiscible oil and water into an emulsion that is difficult to stratify. The emulsifier is generally a surfactant having both properties of some hydrophilic polar groups and hydrophobic (lipophilic) non-polar groups.

Initiator: initiator is a substance that can initiate a polymerization reaction of monomers. For example, a free radical initiator refers to a type of compound that is readily decomposed by heat into free radicals (that are, primary free radicals), and can be used to initiate free radical polymerization and co-polymerization reactions of alkene and diene monomers.

For ease of description, in the foregoing preparation method of binder, the process of the foregoing preparation method is defined in paragraphs as step 1, step 2, and step 3 according to the writing order of the paragraphs. It can be understood by those skilled in the art that in the foregoing method in specific embodiments, the writing order of the steps does not imply a strict order of execution or constitute any limitation on the process of implementation, and a specific execution order of the steps should be determined based on their functions and possible internal logics.

In step 1, water, the emulsifier, the initiator, and the constituent monomers of the polyacrylate polymer are mixed and stirred; and water and the emulsifier are stirred and dispersed to form an emulsion, to be specific, the emulsifier forms micelles in the aqueous phase, most of the micelles are solubilized with monomers, and under a condition of temperature rise, the initiator initiates polymerization of the monomers inside the micelles to obtain the core-layer seed emulsion. In step 2, the emulsifier and water are likewise dispersed to form an emulsion; under certain pressure, the monomers enter a reaction system for micelles; and under a condition of temperature rise, the initiator enters the reaction system to initiate polymerization reaction of the monomers. In step 2, the reaction occurs in the core-layer seed emulsion in step 1 such that the polyvinylidene fluoride polymer formed in step 2 is attached to the surface of the polyacrylate polymer in step 1, so as to form the core-shell-structured binder. In step 2, the dispersion polymerization and nucleation mechanism of polyvinylidene fluoride belongs to the oligomer nucleation mechanism, and under a same conversion rate, the amount of the initiator or the emulsifier can be increased to obtain a smaller particle size of polyvinylidene fluoride latex particles.

In step 2, the constituent monomers of the polyvinylidene fluoride polymer are gaseous and are difficult to enter the micelles at atmospheric pressure. Therefore, the gaseous monomers enter the micelles under pressurization such that the reaction can be carried out effectively.

The initiator in steps 1 and 2 needs to be converted at a specified temperature to have the function of initiating monomer polymerization. Therefore, steps 1 and 2 are entirely performed under a heating condition.

In addition, mass of water in step 2 being greater than or equal to 0 refers to that water can be either added or not added in step 2. It can be understood that when water added in step 1 is sufficient, to be specific, when water added in step 1 allows a solid content after the reactions in steps 1 and 2 to be within a preset range, water can be not added in step 2; and when water added in step 1 is not sufficient, a certain amount of water needs to be added in step 2 to regulate the solid content of the system, so as to prevent viscosity from increasing after reaction and the reaction rate from slowing down.

It can be understood that a stirring speed in steps 1 and 2 is 1000 r/min-5000 r/min, for example, 1000 r/min, 2000 r/min, 3000 r/min, 4000 r/min, or 5000 r/min, which is not specifically limited; and stirring is performed for 60 min ± 20 min to obtain a prepolymer emulsified to uniformity under such stirring conditions for later use.

In some embodiments, a mass ratio of the constituent monomers of the polyacrylate polymer to the constituent monomers of the polyvinylidene fluoride polymer is (2-100): 1, optionally (10-90): 1.

To obtain the raspberry-shaped core-shell structure, the constituent monomers of the polyacrylate polymer should have a larger mass than the constituent monomers of the polyvinylidene fluoride polymer so that a structural surface area of the formed core layer is large enough. To be specific, the core layer has a larger mass with larger structure, and the shell layer has smaller mass, ensuring that the shell layer structure cannot entirely encapsulate the surface of the core layer, that is, the polyvinylidene fluoride polymer is not continuously attached to the surface of the core layer, leading to low crosslinking degree and crystallinity of the polyvinylidene fluoride polymer, thereby reducing the crystallinity of the polyvinylidene fluoride polymer through this core-shell structure, and improving the adhesion performance of the binder prepared. Therefore, as shown in FIG. 2, the mass ratio of the constituent monomers of the polyacrylate polymer to the constituent monomers of the polyvinylidene fluoride polymer is (2-100):1, for example, 2:1, 10:1, 20:1, 30:1, 40:1, 50:1, 60:1, 70:1, 80:1, 90:1, or 100:1, which is not specifically limited.

In some embodiments, the step of mixing and stirring water, an emulsifier, an initiator, and constituent monomers of a polyacrylate polymer and heating for reaction to obtain a core-layer seed emulsion includes the following steps: mixing and stirring water, the emulsifier, and the constituent monomers of the polyacrylate polymer to obtain a core-layer monomer pre-emulsion; and after temperature rise, adding the initiator and stirring for reaction to obtain the core-layer seed emulsion after the reaction.

To avoid explosive polymerization under a heating condition caused by excessive initiator added in one time before heating, in this application, water, the emulsifier, and the constituent monomers of the polyacrylate polymer are mixed and stirred to obtain the core-layer monomer pre-emulsion, and then after temperature rise, the initiator is added and stirred for reaction to obtain the core-layer seed emulsion after the reaction. It can be understood that the initiator is added dropwise slowly, for example, at a dropwise addition speed of 10 ml/min-500 ml/min. It can also be understood that the initiator is added dropwise after dissolved in water.

In some embodiments, the step of mixing and stirring water, an emulsifier, an initiator, and constituent monomers of a polyacrylate polymer and heating for reaction to obtain a core-layer seed emulsion includes the following steps: mixing and stirring water, the emulsifier, and the constituent monomers of the polyacrylate polymer to obtain a core-layer monomer pre-emulsion; and after temperature rise, adding in batches the initiator and stirring for reaction to obtain the core-layer seed emulsion after the reaction.

To avoid explosive polymerization caused by excessive initiator added dropwise in one batch, after temperature rise, the initiator is added in batches and stirred for reaction to obtain the core-layer seed emulsion after the reaction. In addition, considering that the half-life period of the initiator is fixed, to avoid that the initiator added dropwise in the first batch is unable to initiate reaction of all monomers, the initiator is added dropwise in batches. For example, after decomposition of the initiator added in the first batch, a small quantity of monomers may still be left, and then a small amount of initiator is supplemented to make the monomers left react completely. The quantity of monomers left is greatly reduced despite a small quantity of monomers still left after supplement of the initiator.

In some embodiments, the step of after temperature rise, adding in batches the initiator and stirring for reaction to obtain the core-layer seed emulsion after the reaction includes the following steps: heating to 70°C ± 10°C, adding 1/3 of the initiator, stirring for reaction for 30 min ± 20 min, continuing to heat to 80°C ± 10°C, adding 2/3 of the initiator, continuing to heat to 90°C ± 10°C, stirring for reaction for 30 min ± 20 min, and cooling down to obtain the core-layer seed emulsion.

Reaction temperature and reaction time affect the degree of polymerization of the crosslinking reaction. To make the monomers react at an appropriate temperature and time to obtain a satisfactory polymer, in step 1, water, the emulsifier, and the constituent monomers of the polyacrylate polymer are mixed and stirred to obtain the core-layer monomer pre-emulsion. For the steps of heating to 70°C ± 10°C, adding 1/3 of the initiator, stirring for reaction for 30 min ± 20 min, continuing to heat to 80°C ± 10°C, adding 2/3 of the initiator, continuing to heat to 90°C ± 10°C, stirring for reaction for 30 min ± 20 min, and cooling down to obtain the core-layer seed emulsion, it can be understood that the temperature for cooling down may be room temperature or 35°C-45°C, for example, 40°C, which is not specifically limited.

In some embodiments, the step of mixing and stirring water, an emulsifier, an initiator, and constituent monomers of a polyacrylate polymer and heating for reaction to obtain a core-layer seed emulsion includes the following steps: mixing and stirring water, the emulsifier, the initiator, and the constituent monomers of the polyacrylate polymer and heating for reaction to obtain the core-layer seed emulsion; and regulating pH of the core-layer seed emulsion to 6-8.

For the prepared polymer of the core layer structure, particles are prone to agglomeration, leading to sedimentation and hindering subsequent preparation to obtain the core-shell-structured binder. Therefore, to avoid agglomeration and sedimentation of the core layer structure, a pH adjusting reagent is added to the prepared core-layer seed emulsion to make the particles in the core-layer seed emulsion evenly dispersed and the system stable. A pH range of the core-layer seed emulsion is pH 6-8, for example, it may be pH 6, pH 7, or pH 8, which is not specifically limited. It can be understood that the specific pH adjusting reagent used is not limited in this application, for example, ammonium hydroxide may be used to adjust the pH.

In some embodiments, the step of putting an emulsifier, an initiator, and constituent monomers of a polyvinylidene fluoride polymer into the core-layer seed emulsion, stirring, and heating under a reaction pressure for polymerization reaction, to obtain a binder includes the following steps: putting the core-layer seed emulsion into a reaction vessel, removing oxygen from the reaction vessel, putting the emulsifier, the initiator, and the constituent monomers of the polyvinylidene fluoride polymer into the reaction vessel, stirring, and heating to 75°C ± 10°C under a reaction pressure for polymerization reaction.

Considering that in a polymerization process, oxygen, as a polymerization inhibitor, affects the polymerization reaction, it is necessary to remove oxygen from the reaction vessel. For example, oxygen in the reaction vessel may be removed before step 2. For example, oxygen may be replaced by filling nitrogen into the reaction vessel. After oxygen is removed, the emulsifier, the initiator, and the constituent monomers of the polyvinylidene fluoride polymer are put into the reaction vessel, stirred, and heated to 75°C ± 10°C under the reaction pressure for polymerization reaction.

In some embodiments, the steps of putting the core-layer seed emulsion into a reaction vessel, removing oxygen from the reaction vessel, putting the emulsifier, the initiator, and the constituent monomers of the polyvinylidene fluoride polymer into the reaction vessel, stirring, and heating to 75°C ± 10°C under a reaction pressure for polymerization reaction include the following steps: putting the core-layer seed emulsion into the reaction vessel, putting the emulsifier and the initiator into the reaction vessel, stirring, removing oxygen from the reaction vessel, then putting the constituent monomers of the polyvinylidene fluoride polymer into the reaction vessel, and heating to 75°C ± 10°C under the reaction pressure for polymerization reaction.

Considering that the emulsifier and the initiator are first put into the reaction vessel and stirred, then the constituent monomers of the polyvinylidene fluoride polymer are added, making the monomers emulsified more fully, the steps of preparing the shell layer may include: putting the core-layer seed emulsion into the reaction vessel, putting the emulsifier and the initiator into the reaction vessel, stirring, removing oxygen from the reaction vessel, then putting the constituent monomers of the polyvinylidene fluoride polymer into the reaction vessel, and heating to 75°C ± 10°C under the reaction pressure for polymerization reaction.

In some embodiments, the steps of putting the core-layer seed emulsion into a reaction vessel, removing oxygen from the reaction vessel, putting the emulsifier, the initiator, and the constituent monomers of the polyvinylidene fluoride polymer into the reaction vessel, stirring, and heating to 75°C ± 10°C under the reaction pressure for polymerization reaction include the following steps: putting the core-layer seed emulsion into the reaction vessel, removing oxygen from the reaction vessel, putting the emulsifier, the initiator, and the constituent monomers of the polyvinylidene fluoride polymer into the reaction vessel, controlling the reaction pressure in the reaction vessel at 3.0 MPa-4 MPa, stirring, and heating to 75°C ± 10°C for polymerization reaction, where when the pressure in the reaction vessel decreases to 3.0 MPa, the constituent monomers of the polyvinylidene fluoride polymer are continued to be put into the reaction vessel, and the pressure in the reaction vessel is controlled at 3.0 MPa-4 MPa until the reaction ends.

Considering that the constituent monomers of the polyvinylidene fluoride polymer are gases, the monomers in the reaction vessel are continuously consumed during the continuous polymerization reaction, causing the pressure in the reaction vessel to decrease continuously, and when the pressure decreases to a specified value, it is difficult for the monomers to enter the solution system to reach inside the micelles for reaction, it is necessary to control the pressure in the reaction vessel within a specified range of values to ensure that the monomers can effectively participate in the reaction. Therefore, the steps of preparing the shell layer may include: putting the core-layer seed emulsion into the reaction vessel, removing oxygen from the reaction vessel, putting the emulsifier, the initiator, and the constituent monomers of the polyvinylidene fluoride polymer into the reaction vessel, controlling a reaction pressure in the reaction vessel at 3.0 MPa-4 MPa, stirring, and heating to 75°C ± 10°C for polymerization reaction, where when the pressure in the reaction vessel decreases to 3.0 MPa, the constituent monomers of the polyvinylidene fluoride polymer are continued to be put into the reaction vessel, and the pressure in the reaction vessel is controlled at 3.0 MPa-4 MPa until the reaction ends.

Considering that excessively low pressure leads to slower reaction rate and excessively high pressure leads to consumption of more energy and acceleration of reaction, the control range of the reaction pressure is 3.0 MPa-4MPa, for example, 3.0 MPa, 3.5 MPa, or 4 MPa, which is not specifically limited.

In some embodiments, in step 1, the mass of the emulsifier accounts for 0.15%-5% of the mass of the constituent monomers of the polyacrylate polymer; and the mass of the initiator accounts for 0.15 %-1% of the mass of the constituent monomers of the polyacrylate polymer.

The amount of the emulsifier needs to be moderate. The emulsifier is an important component for emulsion polymerization since the emulsifier can convert mutually immiscible oil (monomer)-water into a fairly stable emulsion that is difficult to stratify. In an emulsion polymerization system, the emulsifier mainly has three functions: the first is to reduce surface tension and disperse monomers into tiny droplets; the second is to form a protective layer on the surface of the droplets or particles to prevent coalescence and keep the emulsion stable; and the third is to form micelles to solubilize the monomers. The size and number of micelles depend on the amount of the emulsifier, so the amount of the emulsifier directly influences performance of a product. In step 1, the mass of the emulsifier accounts for 0.15% to 5% of the mass of the constituent monomers of the polyacrylate polymer, for example, 0.15%, 0.2%, 0.25%, 0.3%, 0.35%, 0.4%, 0.45%, or 5%, which is not specifically limited. The amount of the initiator has great influence on speed of polymerization and performance of a product. Increased amount of the initiator leads to accelerated speed of polymerization, which leads to unstable polymerization reaction, decreased molecular weight and product yield, and deteriorated performance of the polymer. In addition, insufficient initiator also leads to difficulty in polymerization reaction. Therefore, in step 1, the mass of the initiator accounts for 0.15% to 1% of the mass of the constituent monomers of the polyacrylate polymer, for example, 0.15%, 0.2%, 0.25%, 0.3%, 0.35%, 0.4%, 0.45%, 0.5%, 0.55%, 0.6%, 0.65%, 0.7%, 0.75%, 0.8%, 0.85%, 0.9%, 0.95%, or 1%, which is not specifically limited.

In some embodiments, in step 1, the emulsifier includes an anionic emulsifier, and the initiator includes an azo initiator, an organic peroxide initiator, and an inorganic peroxide initiator.

The anionic emulsifier is a surface active substance, and when dissolved in water, has its active part that tends to dissociate into negatively charged ions, characterized by having a large organic anion that can react with alkali to generate a salt. In terms of structure of the negatively charged ion part, the salt can be divided into three types: carboxylate type, sulfonate type, and sulfate type.

The azo initiator refers to a type of free radical initiators containing a nitrogen-nitrogen double bond in molecular structure.

The peroxide initiator refers to a type of compound containing peroxy (-O-O-), for which after heated, the -O-O- bond breaks and splits into two corresponding free radicals, thereby initiating monomer polymerization. Such type of compound is known as a peroxide initiator. The peroxide initiators are divided into two types: inorganic peroxide initiator and organic peroxide initiator. The inorganic peroxide initiator includes hydrogen peroxide, ammonium persulfate, potassium persulfate, or the like; and the organic peroxide initiator includes benzoyl peroxide, tert-butyl benzoyl peroxide, methyl ethyl ketone peroxide, and the like.

The emulsifier refers to a substance that can make water into emulsion state. A specific type and structure of the emulsifier are not limited in this application, and any substance that can provide the above function and has no influence on a reaction system can be applied in this application. For example, in step 1, the emulsifier used includes an anionic emulsifier. The initiator refers to a substance that can initiate monomer to undergo a polymerization reaction. A specific type and structure of the initiator is not limited in this application, and any substance that can provide the above function and has no influence on a reaction system can be applied in this application. For example, in step 1, the initiator includes an azo initiator, an organic peroxide initiator, and an inorganic peroxide initiator.

In some embodiments, in step 1, the emulsifier includes at least one of sodium lauryl sulfate, sodium dodecyl sulfonate, sodium dodecyl benzene sulfonate, sodium styrene sulfonate, and sodium vinyl sulfonate; and the initiator includes at least one of azobisisobutyronitrile, azobisisheptanenitrile, isopropyl benzene hydrogen peroxide, tert-butyl hydrogen peroxide, benzoyl peroxide and the like, ammonium persulfate, potassium persulfate, sodium persulfate, and hydrogen peroxide.

The emulsifier refers to a substance that can make water into emulsion state. For example, the emulsifier used in step 1 includes at least one of sodium lauryl sulfate, sodium dodecyl sulfonate, sodium dodecyl benzene sulfonate, sodium styrene sulfonate, and sodium vinyl sulfonate. To be specific, the emulsifier used may be one of the above substances, for example, a preferred emulsifier is sodium dodecyl benzene sulfonate; or it may be a mixture of more than one of the above substances. The initiator refers to a substance that can initiate monomer to undergo a polymerization reaction. For example, the initiator used in step 1 includes at least one of azobisisobutyronitrile, azobisisheptanenitrile, isopropyl benzene hydrogen peroxide, tert-butyl hydrogen peroxide, benzoyl peroxide and the like, ammonium persulfate, potassium persulfate, sodium persulfate, and hydrogen peroxide. To be specific, the initiator used may be one of the above substances, for example, a preferred initiator is potassium persulfate; or it may be a mixture of more than one of the above substances.

In some embodiments, in step 2, the mass of the emulsifier accounts for 0.1%-5% of the mass of the constituent monomers of the polyvinylidene fluoride polymer; and the mass of the initiator accounts for 0.15%-1% of the mass of the constituent monomers of the polyvinylidene fluoride polymer.

The amount of the emulsifier needs to be moderate. The emulsifier is an important component for emulsion polymerization since the emulsifier can convert mutually immiscible oil (monomer)-water into a fairly stable emulsion that is difficult to stratify. In an emulsion polymerization system, the emulsifier mainly has three functions: the first is to reduce surface tension and disperse monomers into tiny droplets; the second is to form a protective layer on the surface of the droplets or particles to prevent coalescence and keep the emulsion stable; and the third is to form micelles to solubilize the monomers. The size and number of micelles depend on the amount of the emulsifier, so the amount of the emulsifier directly influences performance of a product. In step 2, the mass of the emulsifier accounts for 0.1% to 5% of the mass of the constituent monomers of the polyvinylidene fluoride polymer, for example, 0.1%, 0.15%, 0.2%, 0.25%, 0.3%, 0.35%, 0.4%, 0.45%, or 5%, which is not specifically limited. The amount of the initiator has great influence on speed of polymerization and performance of a product. Increased amount of the initiator leads to accelerated speed of polymerization, which leads to unstable polymerization reaction, decreased molecular weight and product yield, and deteriorated performance of the polymer. In addition, insufficient initiator also leads to difficulty in polymerization reaction. Therefore, in step 2, the mass of the initiator accounts for 0.15% to 1% of the mass of the constituent monomers of the polyvinylidene fluoride polymer, for example, 0.15%, 0.2%, 0.25%, 0.3%, 0.35%, 0.4%, 0.45%, 0.5%, 0.55%, 0.6%, 0.65%, 0.7%, 0.75%, 0.8%, 0.85%, 0.9%, 0.95%, or 1%, which is not specifically limited.

In some embodiments, in step 2, the emulsifier includes a polyfluoride compound, and the initiator includes an organic peroxide initiator and an inorganic peroxide initiator.

The emulsifier refers to a substance that can make water into emulsion state. A specific type and structure of the emulsifier are not limited in this application, and any substance that can provide the above function and has no influence on a reaction system can be applied in this application. For example, in step 2, the emulsifier used includes a polyfluoride compound. The initiator refers to a substance that can initiate monomer to undergo a polymerization reaction. A specific type and structure of the initiator is not limited in this application, and any substance that can provide the above function and has no influence on a reaction system can be applied in this application. For example, in step 2, the initiator includes an organic peroxide initiator and an inorganic peroxide initiator. The initiator used is preferably an organic peroxide initiator, and polyvinylidene fluoride prepared using such initiator has high stability.

In some embodiments, in step 2, the emulsifier includes at least one of ammonium perfluoropolyether carboxylate, sodium perfluoropolyether carboxylate, and potassium perfluoropolyether carboxylate, and the initiator includes at least one of benzoyl peroxide, di-tert-butyl peroxide, di-isopropyl peroxydicarbonate, di-n-propyl peroxydicarbonate, diethyl peroxydicarbonate, and persulfate.

The emulsifier refers to a substance that can make water into emulsion state. For example, the emulsifier used in step 2 includes at least one of ammonium perfluoropolyether carboxylate, sodium perfluoropolyether carboxylate, and potassium perfluoropolyether carboxylate. To be specific, the emulsifier used may be one of the above substances, for example, it may be sodium perfluoropolyether carboxylate. The emulsifier can reduce surface tension and prevent coalescence of monomer liquid or latex particles. In addition, the emulsifier may alternatively be a mixture of more than one of the above substances. The initiator refers to a substance that can initiate monomer to undergo a polymerization reaction. For example, the initiator used in step 2 includes at least one of benzoyl peroxide, di-tert-butyl peroxide, di-isopropyl peroxydicarbonate, dipropyl peroxydicarbonate, diethyl peroxydicarbonate, and persulfate. To be specific, the initiator used may be one of the above substances, for example, a preferred initiator is di-isopropyl peroxydicarbonate; or it may be a mixture of more than one of the above substances.

In some embodiments, the constituent monomers of the polyvinylidene fluoride polymer include vinylidene fluoride; or the constituent monomers of the polyvinylidene fluoride polymer include vinylidene fluoride, and vinylidene fluoride, and at least one of hexafluoropropylene, pentafluoropropylene, tetrafluoropropylene, trifluoropropylene, perfluorobutene, tetrafluoroethylene, trifluoroethylene, trifluorochloroethylene, and fluoroethylene.

The polyvinylidene fluoride polymer refers to a polymer using vinylidene fluoride as monomers. In addition to vinylidene fluoride, the monomers of the polyvinylidene fluoride polymer further include at least one of hexafluoropropylene, pentafluoropropylene, tetrafluoropropylene, trifluoropropylene, perfluorobutene, tetrafluoroethylene, trifluoroethylene, trifluorochloroethylene, and fluoroethylene. To be specific, the polyvinylidene fluoride polymer may be a homopolymer of vinylidene fluoride or a copolymer of vinylidene fluoride and other fluorine-containing ethylene, which is not specifically limited.

In some embodiments, in step 2, the step of putting water, an emulsifier, an initiator, and constituent monomers of a polyvinylidene fluoride polymer into the core-layer seed emulsion, stirring, and heating under a reaction pressure for polymerization reaction, to obtain a binder includes the following steps: putting water, a chain transfer agent, the emulsifier, the initiator, and the constituent monomers of the polyvinylidene fluoride polymer into the core-layer seed emulsion, stirring, and heating under the reaction pressure for polymerization reaction, to obtain the binder.

The chain transfer agent is used for controlling molecular weight distribution of a product in the polymerization reaction. Chain transfer refers to a process of transferring active centers from a propagating chain to another molecule in a chain polymerization reaction. The number of the active centers remains unchanged, and a propagating macromolecular chain becomes inactive to form stable macromolecules, and thus the molecular weight of the product is reduced.

To effectively control the molecular weight of the reaction product, in step 2, water, the chain transfer agent, the emulsifier, the initiator, and the constituent monomers of the polyvinylidene fluoride polymer are put into the core-layer seed emulsion, stirred, and heated under the reaction pressure for polymerization reaction, to obtain the binder. The chain transfer agent is added in the polymerization reaction process to prepare an appropriate binder.

In some embodiments, mass of the chain transfer agent accounts for 1%-3% of mass of the constituent monomers of the polyvinylidene fluoride polymer. The chain transfer agent includes an alcohol compound, an ester compound, a ketone compound, and halogenated hydrocarbon.

The mass of the chain transfer agent accounts for 10/0-3% of the mass of the constituent monomers of the polyvinylidene fluoride polymer, for example, 1%, 1.5%, 2%, 2.5%, or 3%, which is not specifically limited. The chain transfer agent includes an alcohol compound, an ester compound, a ketone compound, and halogenated hydrocarbon; and the chain transfer agent is not limited to any specific type.

In some embodiments, a total mass of water in step 1 and water in step 2 accounts for 45%-60% of mass of all the materials in steps 1 and 2; and water in steps 1 and 2 is deionized water.

As a dispersion medium, water has functions such as mass transfer and temperature control. If the amount of water is excessively small or excessively large, it is difficult to control viscosity of the reaction system to fall within a reasonable range. The total mass of water in step 1 and water in step 2 accounts for 45%-60% of the mass of all the materials in steps 1 and 2, for example, 45%, 50%, 55%, or 60%, which is not specifically limited. In addition, water in steps 1 and 2 is deionized water, so as to avoid impurities in water affecting the polymerization reaction.

This application further provides a separator, where the separator includes the foregoing binder or a binder prepared using the foregoing preparation method of binder. The binder has adopted all the technical solutions of all the foregoing embodiments, and therefore has at least all the beneficial effects brought by the technical solutions of the foregoing embodiments. Details are not described herein again.

The separator being coated with the foregoing binder can improve adhesion performance between an electrode plate and the binder, and alleviate the problem of openings in an existing pre-cold pressing process for battery cells.

An embodiment of this application further provides an electrode assembly, where the electrode assembly includes the foregoing separator. The separator has adopted all the technical solutions of all the foregoing embodiments, and therefore has at least all the beneficial effects brought by the technical solutions of the foregoing embodiments. Details are not described herein again.

The electrode assembly includes a positive electrode plate, a negative electrode plate, and a separator. The binder is applied on the separator to adhere the electrode plates and the separator together, so as to alleviate the problem of openings for electrode plates and separators.

An embodiment of this application further provides a battery cell, where the battery cell includes the foregoing electrode assembly. The electrode assembly has adopted all the technical solutions of all the foregoing embodiments, and therefore has at least all the beneficial effects brought by the technical solutions of the foregoing embodiments. Details are not described herein again.

The foregoing electrode assembly being applied to the battery cell can improve large-clamp cycling performance of the battery cell.

An embodiment of this application further provides a battery, where the battery includes the foregoing battery cell. The battery cell has adopted all the technical solutions of all the foregoing embodiments, and therefore has at least all the beneficial effects brought by the technical solutions of the foregoing embodiments. Details are not described herein again.

The battery may include a battery module and a battery pack.

An embodiment of this application further provides an electric apparatus, where the electric apparatus includes the foregoing battery cell or battery. The battery cell or the battery has adopted all the technical solutions of all the foregoing embodiments, and therefore has at least all the beneficial effects brought by the technical solutions of the foregoing embodiments. Details are not described herein again.

In addition, the following describes an electrode assembly, a battery cell, a battery, and an electric apparatus in this application with appropriate reference to the accompanying drawings.

An embodiment of this application provides an electrode assembly.

Generally, the electrode assembly includes a positive electrode plate, a negative electrode plate, an electrolyte, and a separator. During charging and discharging of a battery, active ions are intercalated and deintercalated between the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the ions to pass through. The separator is the foregoing separator provided in this application.

The positive electrode plate includes a positive electrode current collector and a positive electrode film layer provided on at least one surface of the positive electrode current collector.

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, when the electrode assembly is used for a lithium-ion battery, a positive electrode active material may be a well-known positive electrode active material used for lithium-ion batteries in the art. For example, the positive electrode active material may include at least one of the following materials: olivine-structured lithium-containing phosphate, lithium transition metal oxide, and respective modified compounds thereof. However, this application is not limited to these materials, but may use other conventional materials that can be used as positive electrode active materials for batteries instead. One of these positive electrode active materials may be used alone, or two or more of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short)), lithium nickel cobalt aluminum oxide (for example, LiNi_{0.85}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylenehexafluoropropylene copolymer, and fluorine-containing acrylate resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

The negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, a copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for batteries in the art. For example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, siliconcarbon composite, silicon-nitrogen composite, and silicon alloy. The tin-based material may be selected from at least one of elemental tin, tin-oxygen compound, and tin alloy. However, this application is not limited to these materials, but may use other conventional materials that can be used as negative electrode active materials for batteries instead. One of these negative electrode active materials may be used alone, or two or more of them may be used in combination.

In some embodiments, the negative electrode film layer further optionally includes a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofiber.

In some embodiments, the negative electrode film layer further optionally includes other additives such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

The electrolyte conducts ions between the positive electrode plate and the negative electrode plate. The electrolyte is not specifically limited to any particular type in this application, and may be selected according to requirements.

In some embodiments, the electrolyte is a liquid electrolyte. The liquid electrolyte includes an electrolytic salt and a solvent.

In some embodiments, the electrolytic salt may be selected from at least one of lithium hexafluorophosphate, lithium tetrafluoroborate, lithium perchlorate, lithium hexafluoroborate, lithium bis(fluorosulfonyl)imide, lithium bis-trifluoromethanesulfonimide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the liquid electrolyte further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving high- or low-temperature performance of the battery.

In some embodiments, the electrode assembly further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into the electrode assembly through winding or lamination.

In some embodiments, the electrode assembly may include an outer package. The outer package may be used for packaging the electrode assembly and the electrolyte.

In some embodiments, the outer package of the electrode assembly may be a hard shell, for example, a hard plastic shell, an aluminum shell, or a steel shell. The outer package of the electrode assembly may alternatively be a soft pack, for example, a soft pouch. A material of the soft pack may be plastic. As the plastic, polypropylene, polybutylene terephthalate, polybutylene succinate, and the like may be listed.

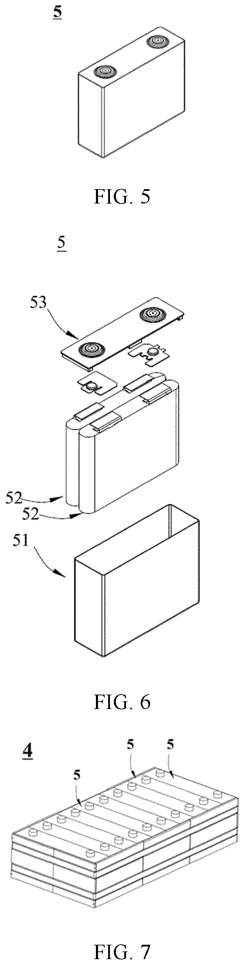

The electrode assembly is not limited to any specific shape in this application, and the electrode assembly may be cylindrical, rectangular, or of any other shape. For example, FIG. 5 shows an electrode assembly 5 of a rectangular structure as an example.

In some embodiments, referring to FIG. 6, the outer package may include a housing 51 and a cover plate 53. The housing 51 may include a base plate and a side plate connected onto the base plate, where the base plate and the side plate enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. The electrode assembly 5 may include one or more electrode assemblies 52, and persons skilled in the art may make choices according to actual requirements.

In some embodiments, the electrode assemblies may be assembled into a battery module, and the battery module may include one or more electrode assemblies. The specific quantity may be chosen by persons skilled in the art according to use and capacity of the battery module.

FIG. 7 shows a battery module 4 as an example. Referring to FIG. 7, in the battery module 4, a plurality of electrode assemblies 5 may be sequentially arranged along a length direction of the battery module 4. Certainly, the electrode assemblies may alternatively be arranged in any other manners. Further, the plurality of electrode assemblies 5 may be fixed by fasteners.

Optionally, the battery module 4 may further include a housing with an accommodating space, and the plurality of electrode assemblies 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

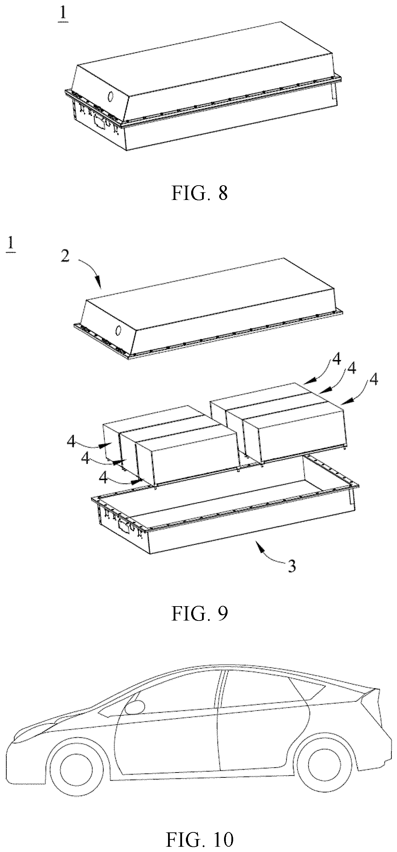

FIG. 8 and FIG. 9 show a battery pack 1 as an example. Referring to FIG. 8 and FIG. 9, the battery pack 1 may include a battery box and a plurality of battery modules 4 arranged in the battery box. The battery box includes an upper box body 2 and a lower box body 3. The upper box body 2 can be engaged with the lower box body 3 to form an enclosed space for accommodating the battery modules 4. The plurality of battery modules 4 may be arranged in the battery box in any manner.

In addition, this application further provides an electric apparatus. The electric apparatus includes at least one of the electrode assembly, the battery module, or the battery pack provided in this application. The electrode assembly, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The electrode assembly, the battery module, or the battery pack may be selected for the electric apparatus based on requirements for using the electric apparatus.

FIG. 10 shows an electric apparatus as an example. The electric apparatus is a battery electric vehicle, a hybrid electric vehicle, a plug-in hybrid electric vehicle, or the like. To satisfy requirements of the electric apparatus for high power and high energy density of an electrode assembly, a battery pack or a battery module may be used.

In another example, the apparatus may be a mobile phone, a tablet computer, a notebook computer, or the like. Such apparatus is generally required to be light and thin and may use an electrode assembly as its power source.

### Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Example 1

### Preparation of binder

In step 1, 752.4 g of methyl acrylate, 185.5 g of acrylonitrile, and 62.1 g of acrylamide were separately added into a 5 L autoclave at a molar ratio of 1:0.4:0.1, then 36 g of sodium dodecyl sulfonate and 1.2 kg of deionized water were added, the mixture was fully stirred for dispersion and emulsification and heated to 70°C, and an initiator solution (a solution formed by dissolving 0.6 g of potassium persulfate in deionized water) was added and stirred for reaction for 30 min. Then, the mixture was continued to be heated to 80°C, and an initiator solution (a solution formed by dissolving 1.2 g of potassium persulfate in deionized water) was slowly added dropwise using a peristaltic pump, and after the dropwise addition was complete, the mixture was heated to 90°C and maintained at that temperature for reaction for 0.5 h, and then cooled down to 40°C to obtain a core-layer seed emulsion, and the pH was adjusted to 7 with ammonium hydroxide.

In step 2, 200 g of deionized water, 1 g of sodium perfluoropolyether carboxylate, 0.85 g of di-isopropyl peroxydicarbonate were added into the autoclave and stirred, evacuation was performed, and the gas was replaced with nitrogen. Then, vinylidene fluoride gas and hexafluoropropylene were filled into the autoclave to increase a pressure in the autoclave to 3.5 MPa, a system reaction temperature was raised to 75°C, and then polymerization reaction was started. When the pressure in the autoclave decreased to 3.0 MPa, the vinylidene fluoride gas and hexafluoropropylene were continued to be filled in so as to control the pressure in the autoclave at 3.0 MPa-3.5 MPa, and the total amount of vinylidene fluoride and hexafluoropropylene involved in the reaction was 500 g. The reaction was stopped when the pressure decreased to below 2 MPa, and the mixture was filtered and discharged to obtain a core-shell-structured polymer binder.

### Preparation of separator

Commercially available PP-PE copolymer microporous film with a thickness of 20 µm and an average pore size of 80 nm was used as a substrate. The binder prepared as described above was added into deionized water and stirred and mixed to uniformity, to obtain a slurry (with a solid content of 20%). The slurry was uniformly applied onto both surfaces of the substrate and dried to remove the solvent, with the composition applied on the substrate having a density of 1.0 g/m² to obtain a separator.

### Preparation of positive electrode plate

Polyvinylidene fluoride (PVDF), lithium iron phosphate (LFP), a conductive agent carbon black, and N-methylpyrrolidone (NMP), at a mass ratio of 1.2:58.38:0.42:40, were well mixed and stirred to prepare a positive electrode slurry. The positive electrode slurry was uniformly applied onto a positive electrode current collector aluminum foil with a loading amount of 200 g/m², followed by drying, cold pressing, and slitting, to obtain a positive electrode plate.

### Preparation of negative electrode plate

Artificial graphite, a conductive agent acetylene black, a binder styrene-butadiene rubber (SBR), and a thickener sodium carboxymethyl cellulose (CMC-Na), at a mass ratio of 96.2:1.0:1.6:1.2, were added into deionized water and well mixed and stirred to prepare a negative electrode slurry (with a solid content of 63%). The negative electrode slurry was uniformly applied onto a negative electrode current collector copper foil with a loading amount of 98 g/m², followed by drying, cold pressing, and slitting, to obtain a negative electrode plate.

### Preparation of electrolyte

At 25°C, ethylene carbonate (EC), ethyl methyl carbonate (EMC), and diethyl carbonate (DEC) were mixed at a volume ratio of 1:1:1 to obtain a mixed solvent, and then LiPF₆ was dissolved in the mixed solvent to obtain an electrolyte, where a concentration of LiPF₆ was 1 mol/L.

### Preparation of battery cell

The foregoing positive electrode plate, separator, and negative electrode plate were stacked in sequence and wound, and pre-pressed and formed (during which the separator was adhered to the electrode plates), to obtain an electrode assembly. The electrode assembly was placed in an outer package, the foregoing electrolyte was added, and processes such as sealing, standing, formation, and aging were performed to obtain a battery cell.

The experimental data of examples 2 to 11 were obtained by changing parameters on the basis of example 1 (as shown in Table 1).

### Comparative example 1: Preparation steps of polyvinylidene fluoride polymer

200 g of deionized water, 1 g of sodium perfluoropolyether carboxylate, 0.5 g of di-isopropyl peroxydicarbonate were added into an autoclave and stirred, evacuation was performed, and the gas was replaced with nitrogen. Then, vinylidene fluoride and hexafluoropropylene gas were filled into the autoclave to increase a pressure in the autoclave to 3.5 MPa, a system reaction temperature was raised to 75°C, and then polymerization reaction was started. When the pressure in the autoclave decreased to 3.0 MPa, vinylidene fluoride and hexafluoropropylene gas were continued to be filled in so as to control the pressure in the autoclave at 3.0 MPa-3.5 MPa, and the total amount of vinylidene fluoride and hexafluoropropylene added was 200 g. The reaction was stopped when the pressure decreased to below 2 MPa, and the mixture was filtered and discharged.

### Comparative example 2: Preparation steps of polymer obtained by polymerization of first polymeric flexible monomer

752.4 g of methyl acrylate, 36 g of sodium dodecyl sulfonate, and 1.2 kg of deionized water were added into a three-necked bottle and well stirred for dispersion and emulsification. The temperature was raised to 70°C and an initiator solution (a solution formed by dissolving 0.6 g of potassium persulfate in deionized water) was added and stirred for reaction for 30 min. Then the temperature was continued to raise to 80°C, and an initiator solution (a solution formed by dissolving 1.2 g of potassium persulfate in 100 g of deionized water) was slowly added dropwise using a peristaltic pump. After the dropwise addition was complete, the mixture was heated to 90°C and maintained at that temperature for reaction for 0.5 h, and then cooled down to 40°C, the pH was adjusted to 7 with ammonium hydroxide, and then the mixture was filtered and discharged.

### Comparative example 3: Preparation steps of polymer obtained by polymerization of second polymeric polar monomer

Deionized water and an initiator with a specified ratio were added into a three-necked flask equipped with a reflux condenser, a thermometer, and a stirring magnet. After stirred to uniformity at room temperature, the mixture was heated to a given temperature to induce decomposition of the initiator. After the temperature was kept constant for about half an hour, a peristaltic pump was used to control the concentration of acrylonitrile into the polymerization system, and the monomer was added into water in small droplets to implement a polymerization reaction. After the monomer was added dropwise, the reaction was continued for a specified period at a constant temperature under stirring. After the reaction ended, the three-necked flask was cooled in the air to room temperature, the reaction was stopped, and the mixture was filtered and discharged.

### Comparative example 4: Preparation steps of polymer obtained by polymerization of third polymeric molecular weight regulating monomer

30 g-90 g of acrylamide monomer was added into 120 g of water to prepare an acrylamide solution, and 0.02 g-1 g of persulfate was dissolved in 30 g of water to obtain an initiator solution. 37.5 g of a solvent isopropanol was added into a 250 mL four-necked reaction flask, stirred at a stirring speed of 200 r/min, and heated to reflux. The monomer solution and the initiator solution were continuously added dropwise with the dropwise addition speed controlled and a dropwise addition time of 120 min. The reflux reaction was kept for 2 h, and the isopropanol was distilled out to obtain a polyacrylamide solution, followed by filter and discharge.

### Comparative example 5: Steps of mixing polymerization of polyvinylidene fluoride and polyacrylate

The polyvinylidene fluoride solution prepared in comparative example 1 and the polyacrylate solution prepared in comparative example 2 were mixed at a mass ratio of 1:1 and well stirred to obtain a mixed solution of polyvinylidene fluoride and polyacrylate, and then the mixed solution was filtered and discharged.

As shown in Tables 1 and 2, in examples 2 to 4 and examples 16 and 17, the ratios of the three core layer polymers were changed while all other conditions remained unchanged; and in examples 5 to 8 and examples 12 to 15, the masses of the core layer and the shell layer were changed while all other conditions remained unchanged.

As shown in Table 3, comparative example 1 shows a binder prepared from a polyvinylidene fluoride polymer; comparative example 2 shows a binder prepared from an acrylate polymer; comparative example 3 shows a binder prepared from an acrylonitrile polymer; comparative example 4 shows a binder prepared from an acrylamide polymer; and comparative example 5 shows a binder prepared from a polymer obtained through mixing polymerization of polyvinylidene fluoride and polyacrylate.

**Table 1 Experimental data parameter table**

| Parameter | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Core layer | Mass ratio of core layer to shell layer | 2 | 2 | 2 | 2 | 2 | 30 | 60 | 100 | 2 | 2 | 2 |
| Shell layer | | 1 | 1 | 1 | 1 | 1 | 1 | 1 | 1 | 1 | 1 | 1 |
| Flexible monomer | Mass ratio of three types of monomers | 1 | 1 | 1 | 1 | 1 | 1 | 1 | 1 | 1 | 1 | 1 |
| Polar monomer | | 0.4 | 0.01 | 0.5 | 0.8 | 0.01 | 0.01 | 0.01 | 0.01 | 0.01 | 0.01 | 0.01 |
| Molecular weight regulating monomer | | 0.1 | 0.01 | 0.1 | 0.15 | 0.01 | 0.01 | 0.01 | 0.01 | 0.01 | 0.01 | 0.01 |
| Median particle size by volume Dᵥ50 of binder (µm) | | 7 | 7 | 7 | 7 | 8 | 8 | 8 | 8 | 0.5 | 30 | 50 |

**Table 2 Experimental data parameter table**

| Parameter | | Example 12 | Example 13 | Example 14 | Example 15 | Example 16 | Example 17 |
|---|---|---|---|---|---|---|---|
| Core layer | Mass ratio of core layer to shell layer | 1.5 | 110 | 10 | 90 | 2 | 2 |
| Shell layer | | 1 | 1 | 1 | 1 | 1 | 1 |
| Flexible monomer | Molar ratio of three types of monomers | 1 | 1 | 1 | 1 | 1 | 1 |
| Polar monomer | | 0.01 | 0.01 | 0.01 | 0.01 | 0.05 | 0.7 |
| Molecular weight regulating monomer | | 0.01 | 0.01 | 0.01 | 0.01 | 0.05 | 0.12 |
| Median particle size by volume Dᵥ50 of binder (µm) | | 8 | 8 | 8 | 8 | 7 | 7 |

**Table 3 Experimental data parameter table**

| Parameter | Comparative example 1 | Comparative example 2 | Comparative example 3 | Comparative example 4 | Comparative example 5 |
|---|---|---|---|---|---|
| Polyvinylidene fluoride polymer | 100% | / | / | / | / |
| Acrylate polymer | / | 100% | / | / | / |
| Acrylonitrile polymer | / | / | 100% | / | / |
| Acrylamide polymer | / | / | / | 100% | / |
| Polymer obtained by mixing polymerization of polyvinylidene fluoride and polyacrylate | / | / | / | / | 100% |
| Median particle size by volume Dᵥ50 of binder (µm) | 7 | 7 | 7 | 7 | 7 |

### Performance test

### 1. Test steps of adhesion force between separator and electrode plate

A battery electrode plate and a separator were stacked and placed on a hot pressing machine, where parameters of the hot pressing machine was set as follows: temperature was 25°C, pressure was 10t, and time was 30s. A sample of adhered separator/positive electrode plate was obtained under the action of pressure. The sample of adhered separator/electrode plate was cut into rectangular sample strips of 150 mm × 20 mm. The electrode plate side of the rectangular sample strip was attached to a steel plate with double-sided tape, and the separator was separated from the electrode plate by 2 cm along a length direction at one end of the rectangular sample strip to obtain a test specimen.

The steel plate was kept horizontal and fixed with a lower clamp of a universal testing machine (Model CTM2100 from Xie Qiang Instrument Manufacturing (Shanghai) Co., Ltd.), and the peeled end of the separator was fixed with an upper clamp of the universal testing machine and connected to a tensile machine. The test conditions were set to a stretching speed of 20 mm/min and a horizontal pull of 10 cm. After the tension became stable, the tension value was recorded, and the adhesion force between the separator and the electrode plate was obtained based on a ratio of the tension value to width of the sample.

### 2. Test steps of battery cell hardness

A battery cell was put on a table with two ends horizontal, with the middle hollow part fixed at a width of 12 cm. The battery cell was laid flat naturally, and a deviation of the battery cell center from the horizontal datum line was measured, so as to evaluate the hardness of the battery cell. A greater deviation of the battery cell center from the horizontal datum line indicates a lower hardness of the battery cell.

### 3. Test steps of battery cycling performance

At 25°C, the battery prepared in examples 1 to 17 and comparative examples 1 to 5 was constant-current charged to 3.8 V at 1/3C, then constant-voltage charged to 0.05C at 3.8 V, left standing for 5 min, then discharged to 2.0 V at 1/3C, and the resulting discharge capacity was recorded as the initial capacity C0. The preceding steps were repeated for the same battery and the discharge capacity Cn after the n-th cycle was recorded, and the battery capacity retention rate Pn after each cycle = (Cn/C0) × 100%. The battery capacity retention rate after 500 cycles can be used to reflect the difference in cycling performance.

**Table 4 Performance test parameter table**

| | Data of adhesion force between separator and electrode plate (N/m) | Battery cell hardness data (mm) | Battery capacity retention rate (%) |
|---|---|---|---|
| Example 1 | 7.20 | 0 | 98.0 |
| Example 2 | 6.96 | 0 | 97.6 |
| Example 3 | 7.28 | 0 | 98.3 |
| Example 4 | 7.14 | 0 | 98.1 |
| Example 5 | 6.92 | 0 | 97.4 |
| Example 6 | 7.35 | 0 | 98.4 |
| Example 7 | 7.43 | 0 | 98.6 |
| Example 8 | 7.09 | 0 | 98.0 |
| Example 9 | 5.66 | 0 | 94.5 |
| Example 10 | 6.58 | 0 | 96.8 |
| Example 11 | 5.80 | 0 | 94.7 |
| Example 12 | 6.85 | 0 | 97.0 |
| Example 13 | 6.70 | 0 | 96.9 |
| Example 14 | 7.21 | 0 | 98.2 |
| Example 15 | 7.18 | 0 | 98.1 |
| Example 16 | 7.12 | 0 | 97.8 |
| Example 17 | 7.16 | 0 | 97.9 |
| Comparative example 1 | 5.01 | 3.8 | 94.2 |
| Comparative example 2 | 5.25 | 3.2 | 94.3 |
| Comparative example 3 | 4.35 | 8.5 | 93.3 |
| Comparative example 4 | 2.89 | 16.2 | 90.6 |
| Comparative example 5 | 5.07 | 3.6 | 94.3 |

As shown in Table 4, the battery cells obtained using the binders in examples 1 to 17 show good battery cell hardness, while the battery cells obtained using the binders in comparative examples 1 to 5 show poor battery cell hardness. This indicates that the binders in examples 1 to 17 have better adhesion performance than the binders in comparative examples 1 to 5. In addition, examples 1 to 1 show better adhesion force between the separator and the electrode plate and better battery cycling performance than comparative examples 1 to 5. This indicates that under the condition of improved adhesion performance of a binder, applying such binder to a separator of a battery can effectively improve the cycling performance of the battery.

The foregoing descriptions are merely preferred embodiments of this application, but are not intended to limit the patent scope of this application. Any equivalent structural transformations made by using the content of the specification and drawings or directly/indirectly used in other related technical fields are included in the patent protection scope of this application.

## Claims

1. A binder, wherein the binder comprises a core layer structure and a shell layer structure provided on a surface of the core layer structure, the core layer structure comprising a polyacrylate polymer, and the shell layer structure comprising a polyvinylidene fluoride polymer.

2. The binder according to claim 1, wherein the shell layer structure comprises a plurality of shells, the plurality of shells being spaced apart on the surface of the core layer structure.

3. The binder according to claim 1 or 2, wherein a mass ratio of the polyacrylate polymer to the polyvinylidene fluoride polymer is (2-100):1, optionally (10-90):1.

4. The binder according to any one of claims 1 to 3, wherein a median particle size by volume Dᵥ50 of the binder is 0.5 µm-50 µm, optionally 7 µm-8 µm.

5. The binder according to any one of claims 1 to 4, wherein constituent monomers of the polyacrylate polymer comprise a first polymeric flexible monomer, a second polymeric polar monomer, and a third polymeric molecular weight regulating monomer.

6. The binder according to claim 5, wherein a molar ratio of the first polymeric flexible monomer, the second polymeric polar monomer, and the third polymeric molecular weight regulating monomer is 1:(0.01-0.8):(0.01-0.15), optionally 1:(0.05-0.7):(0.05-0.12).

7. The binder according to claim 5 or 6, wherein the first polymeric flexible monomer contains an ester bond in structure, the second polymeric polar monomer contains a cyano group in structure, and the third polymeric molecular weight regulating monomer contains an amide bond.

8. The binder according to any one of claims 5 to 7, wherein the first polymeric flexible monomer is an acrylate monomer, the second polymeric polar monomer is an acrylonitrile monomer, and the third polymeric molecular weight regulating monomer is an acrylamide monomer.

9. The binder according to claim 8, wherein the acrylate monomer comprises at least one of methyl acrylate, ethyl acrylate, n-butyl acrylate, isobutyl acrylate, sec-butyl acrylate, tert-butyl acrylate, n-propyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, and 2-hydroxypropyl methacrylate; and/or the acrylonitrile monomer comprises at least one of acrylonitrile and methacrylonitrile;
and/or the acrylamide monomer comprises at least one of acrylamide, N-methylolacrylamide, and N-butoxymethylacrylamide.

10. The binder according to any one of claims 1 to 9, wherein the polyvinylidene fluoride polymer comprises at least one of vinylidene fluoride polymer, vinylidene fluoride-hexafluoropropylene copolymer, vinylidene fluoride-pentafluoropropylene copolymer, vinylidene fluoride-tetrafluoropropylene copolymer, vinylidene fluoride-trifluoropropylene copolymer, vinylidene fluoride-perfluorobutene copolymer, vinylidene fluoride-tetrafluoroethylene copolymer, vinylidene fluoride-trifluoroethylene copolymer, vinylidene fluoride-trifluorochloroethylene copolymer, or vinylidene fluoride-fluoroethylene copolymer.

11. A preparation method of binder, comprising:
mixing and stirring water, an emulsifier, an initiator, and constituent monomers of a polyacrylate polymer and heating for reaction to obtain a core-layer seed emulsion; and
putting water, an emulsifier, an initiator, and constituent monomers of a polyvinylidene fluoride polymer into the core-layer seed emulsion, stirring, and heating under a reaction pressure for polymerization reaction, to obtain a core-shell-structured binder.

12. The preparation method of binder according to claim 11, wherein a mass ratio of the constituent monomers of the polyacrylate polymer to the constituent monomers of the polyvinylidene fluoride polymer is (2-100): 1, optionally (10-90): 1.

13. The preparation method of binder according to claim 11 or 12, wherein the step of mixing and stirring water, an emulsifier, an initiator, and constituent monomers of a polyacrylate polymer and heating for reaction to obtain a core-layer seed emulsion comprises the following steps:
mixing and stirring water, the emulsifier, and the constituent monomers of the polyacrylate polymer to obtain a core-layer monomer pre-emulsion; and
after temperature rise, adding in batches the initiator and stirring for reaction to obtain the core-layer seed emulsion after the reaction.

14. The preparation method of binder according to any one of claims 11 to 13, wherein the constituent monomers of the polyvinylidene fluoride polymer comprise vinylidene fluoride; or preferably, the constituent monomers of the polyvinylidene fluoride polymer comprise vinylidene fluoride and at least one of hexafluoropropylene, pentafluoropropylene, tetrafluoropropylene, trifluoropropylene, perfluorobutene, tetrafluoroethylene, trifluoroethylene, trifluorochloroethylene, and fluoroethylene.

15. A separator, wherein the separator comprises the binder according to any one of claims 1 to 10 or a binder prepared using the preparation method of binder according to any one of claims 11 to 14.

16. An electrode assembly, wherein the electrode assembly comprises the separator according to claim 15.

17. A battery cell, wherein the battery cell comprises the electrode assembly according to claim 16.

18. A battery, wherein the battery comprises the battery cell according to claim 17.

19. An electric apparatus, wherein the electric apparatus comprises the battery cell according to claim 17 or the battery according to claim 18.
